# EUROPEAN PATENT APPLICATION

(11) **EP 2 309 234 A1**
(43) Date of publication of application: **13.04.2011**
(21) Application number: 09425398.6
(22) Date of filing: 09.10.2009
(51) Int. Cl.: G01F 23/04

(54) **Dipstick for checking the level of oil in the engine of a motor vehicle**

(71) Applicant: Fiat Group Automobiles S.p.A., 10135 Torino (TO) (IT)
(72) Inventor: D'Epiro, Clino, 10135 Torino (IT)
(74) Representative: Lotti, Giorgio

(57) **Abstract**

A dipstick (10) for checking the level of oil in the engine of a motor vehicle, **characterized in that** it is made of a flexible metal material and is provided with a terminal end (11) made of stamped elastic sheet steel crimped to the end of the dipstick (10).

## Description

The subject of the invention is a dipstick for checking the level of oil in the engine of a motor vehicle and in particular the terminal end of the dipstick.

Currently, terminal ends of dipsticks for checking the oil level are mostly made in the form of rigid box-section metal elements, having an ogive and presenting impressed thereon the maximum and minimum limits of oil level.

Box-section terminal ends, however, are costly to produce and, since they are rigid, they can constitute an obstacle to proper sliding of the dipstick in its tube.

Their length is in fact constrained by the difference between the minimum level and maximum level of the oil in the sump and can hence constitute a hindrance in the narrow curves of the tube.

In other cases, plastic terminal ends are used co-moulded on the end of the dipstick, which is made of music wire. These dipsticks are costly because the technology used for making them is costly.

There are also oil dipsticks of a low-cost type that use a single strap of elastic metal or else a single rod made of plastic fused in a single piece with the grip.

Dipsticks made of a single metal strap are very inexpensive but, since the metal strap is elastic only in one direction, it is unsuitable for tubes with narrow curves and three-dimensional development.

Dipsticks completely made of plastic have a marked memory effect and in any case entail burdensome costs of tooling in so far as there is required a different tool for each application.

The purpose of the invention is to overcome the drawbacks of dipsticks commercially available today of the type referred to above by proposing a dipstick for checking the level of oil in the engine of a motor vehicle, **characterized in that** it is made of a flexible metal material and is provided with a terminal end made of stamped elastic sheet steel crimped to the end of the dipstick.

The dipstick according to the invention will now be described with reference to the annexed drawings, in which:
Figure 1 illustrates the end of the oil dipstick according to the invention in a preferred embodiment;
Figure 2 illustrates the dipstick of Figure 1 that enters the tube for checking the oil level; and
Figure 3 illustrates a variant to the dipstick of the preceding figures.

As may be noted in the annexed figures, the dipstick 10 according to the invention, made of a flexible metal material, preferably a steel strand (of a Bowden-cable type) or of music wire, is provided with a terminal end 11 made of elastic sheet steel stamped like a fast-on terminal. The terminal end is crimped to the end of the dipstick 10 by bending its side appendages 12 thereon.

The critical aspect of sliding typical of different known dipsticks is overcome because the terminal 11 is no longer rigid, but has an absolute flexibility to torsion and has wide radiused chamfers 13 that facilitate sliding thereof in the tube 14 for reading the oil level. The flexibility to torsion of the "wire" of the dipstick 10 guarantees that it can adapt to any curve of the tube 14.

The terminal end 11 according to the invention has very low production costs and above all uses a technology, the stamping of sheet steel, which can be scaled to mass-production processes.

In fact, in order to keep the costs down, the die for producing the fast-on terminal can be obtained in a series of steps with a number of stations adequate for the production volume.

It is even thinkable to envisage a single piece of equipment that carries out, as last step of production of the die for the fast-on terminal, crimping thereof on the strand that will function as dipstick.

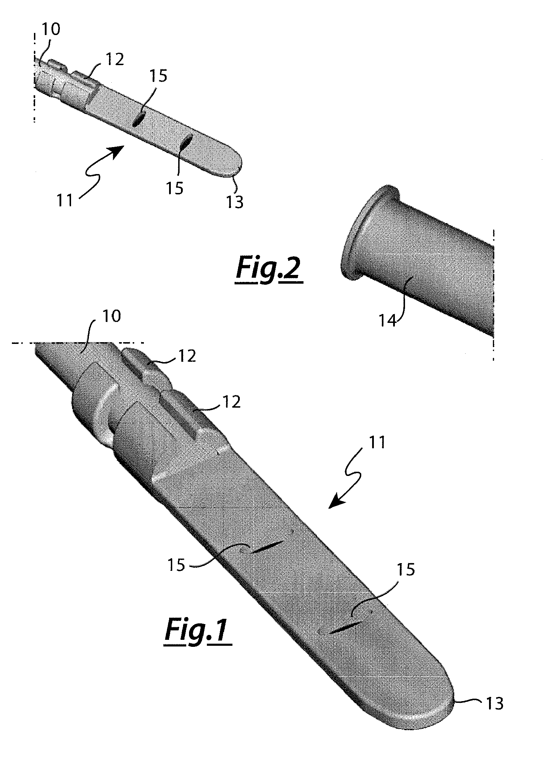

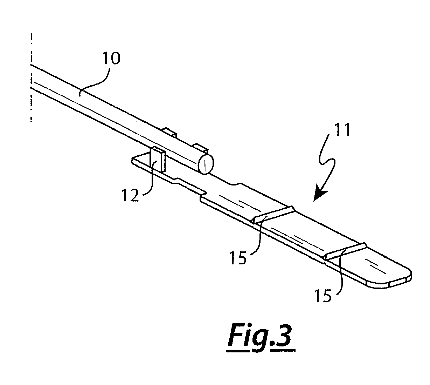

The impressions 15 for the maximum level and minimum level, whether pinched (Figure 3) or punched (Figures 1 and 2), can be made in a modular way.

Hence, just one tool can produce more than one code, thus solving the problem of those applications of a small-scale production type for which it would be economically disadvantageous to provide specific equipment.

Technical analysis would suggest, in the case where of the joint solution of strand plus fast-on terminal is adopted, an arrangement that is less expensive than current solutions available on the market.

## Claims

1. A dipstick (10) for checking the level of oil in the engine of a motor vehicle, **characterized in that** it is made of a flexible metal material and is provided with a terminal end (11) made of stamped elastic sheet steel crimped to the end of the dipstick (10).

2. The dipstick according to Claim 1, **characterized in that** the metal material of which the dipstick is made is a steel strand.

3. The dipstick according to Claim 1, **characterized in that** the metal material of which the dipstick is made is a music wire.

4. The dipstick according to Claim 1, **characterized in that** the terminal end (11) is crimped to the end of the dipstick (10) by bending its side appendages (12) thereon.

5. The dipstick according to Claim 1, **characterized in that** the terminal end (11) has wide radiused chamfers (13) that facilitate sliding thereof in the tube (14) for reading the oil level.
